# EUROPEAN PATENT SPECIFICATION

(11) **EP 2 824 038 B1**
(45) Date of publication and mention of the grant of the patent: **21.10.2020**
(21) Application number: 14176477.9
(22) Date of filing: 10.07.2014
(51) Int. Cl.: B65D 65/40, B32B 27/32

(54) **Thin film for waste packing cassettes**
Dünnfilm für Abfallverpackungskassetten
Film mince pour cassettes de conditionnement de déchets

(30) Priority: 10.07.2013 EP 13175915
(43) Date of publication of application: 14.01.2015
(73) Proprietor: Flexopack S.A., 194 00 Koropi (GR)
(72) Inventor: Gkinosatis, Dimitris, 19400 Koropi Attica (GR)
(74) Representative: Isarpatent

(56) References cited:
- EP-A1- 2 332 723
- EP-A1- 2 535 279

## Description

The present invention refers to a polymeric film comprising odor barrier material and being able to pack malodorous waste.

A lot of waste products produce smells that are annoying to the environment. Examples are decayed food, kid nappies and cat litter.

In the prior art there are many films that could be used for protection from malodors. As well known in the art, the use of materials like EVOH, PVDC, polyacrylonitrile is recommended in order to not allow malodors escape from the container (eg bag or other configuration) and create an unpleasant atmosphere.

There are also a lot of known configurations of packing a certain length of film (eg. 20 meters) in a compressed form (eg. in a cassette). Examples of the representative cassettes are shown in US 4,934,529 or US 3,356,192.

Generally the cassette comprises a tubular core, casing wall and cassette bottom. The film is pulled through the area between the lid of the cassette and the casing wall. The flexible tubing is dispensed from the cassette. After the malodorous item is thrown into the bag the core is rotated and the flexible tube is twisted so that it closes as hermetically as possible the waste/environment area.

To dispose the next diaper the user pushes the next portion of film. The previous hermetically closed diaper is pushed downwards and the new diaper is packed in a new configuration. All these different packs are stored in a bin which is periodically emptied.

Separation of one pack to the other can be done by various means. A rotary knife is preferred.

### FILM CHARACTERISTICS

In the prior art a lot of possible film configurations either monolayer or multilayer have been proposed. The basic characteristics a film should have in order to be used in the particular case are
1. Barrier to odours
2. To have the proper deadfold properties (non resilient) so that is compressed efficiently in the cassette.
3. To have sufficient mechanical properties (eg tensile strength at break, elongation).

In the prior art the EP2332723 provides a solution to the problem. Nevertheless, there are cases where the film of this application is considered too flimsy to withstand the process of removing the film from the cassette, putting litter inside and then cutting. There are also certain limitations in producing efficiently such low thickness film in a hot blown film line as there are often interruptions of the machine due to low melt strength of such a thin film.

On the other hand by producing a higher thickness film there are certain limitations in the efficient compressing of the film in the cassette. This is obvious as the higher the thickness of the film is, the most difficult is to compress in a cassette.

### SUMMARY OF THE INVENTION

The invention is directed to a multilayer film with weight between and including 15 and 22 g/m² for use in malodorous item packaging, where the film comprises at least a layer comprising polypropylene and a further layer comprising an oxygen barrier material having a weight of less than 1.5 g/m².

In a preferred embodiment, the film comprises at least three film layers comprising:
1. An oxygen barrier layer.
2. The outer and/or inner layer comprises polypropylene.

### Definitions:

In this application the following definitions are used:
The term "film" refers to a flat or tubular flexible structure of thermoplastic material.

The term "heat shrinkable" refers to a film that shrinks at least 10% in at least one of the longitudinal and transverse directions (MD and TD, respectively) when heated at 90°C for 4 seconds. The shrinkability is measured in water according to ASTM 2732. For temperatures like 100°C or more, glycerine is used as a reference liquid.

The term "total heat shrinkability" refers to the sum of heat shrinkability at the MD direction and heat shrinkability at the TD direction. In all cases, ASTM 2732 is used for measurement of shrinkabilities.

The term "multilayer" refers to a film comprising 2 or more layers.

The phrase "longitudinal direction" or "machine direction" herein abbreviated "MD" refers to a direction along the length of the film.

The phrase "outer layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

As used herein, the term "homopolymer" refers to a polymer resulting from polymerization of a single monomer.

As used herein, the term "copolymer" refers to a polymer resulting from polymerization of at least two different polymers.

As used herein, the term "terpolymer" refers to a polymer of three different monomers.

As used herein, the term "polymer" includes both above types.

As used herein, the term "polyolefin" refers to any polymerized olefin, which can be linear, branched, cyclic, aliphatic, substituted or unsubstituted. More specifically, included in the term polyolefin are homopolymers of olefin, copolymers of olefin, copolymers of an olefin and a non olefinic comonomer(such as ester) etc.

Specific examples include polyethylene homopolymer, polypropylene homopolymer, polybutene homopolymer, ethylene alpha olefin copolymer, propylene alpha olefin copolymer, butene alpha olefin copolymer, ionomer, ethylene ester copolymer etc.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra low density polyethylene (ULDPE), metallocene catalysed polymers and polyethylene plastomers and elastomers.

As used herein the term "homogeneous ethylene alpha olefin copolymers" refer to ethylene alpha olefin copolymers having a molecular weight distribution less than 2.7 as measured by GPC. Typical examples of these polymers are AFFINITY from DOW or Exact from Exxon.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is less than 40%.

As used herein the phrase "ethylene vinyl acetate copolymer" or EVA refer to copolymers of ethylene and vinyl acetate.

As used herein the phrase "ethylene ester copolymer" includes any polymer made from ethylene and ester monomers. It is obvious that this term includes EVAs, EMAs and other polymers.

As used herein the term "oxygen barrier polymer" refers to polymers which have the property to limit the passage of oxygen through a film or a layer comprising the polymer. Common materials are EVOH, PVDC or polyamide.

As used herein, the term EVOH refers to saponified products of ethylene vinyl ester copolymers. The ethylene content is typically in the range of 25 to 50% per mol. All the later references to EVOH ethylene content will be in % per mol.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term "polyamide" refers to homopolymers and copolymers characterized by the presence of the amide group -CONH-. Polyamide 6, polyamide 66, polyamide 12, polyamide 6/66, polyamide 6/12, polyamide elastomers, MXD polyamides and other copolymers are specifically useful for the invention.

As used herein the term "polyester" refers to polymers comprising terephthalate units. Examples of polyesters are PET (polyethylene terephthalate), PBT (polybutylene terephthalate), polyester elastomer (block copolymer comprising ester or ether units), PTT and other similar polymers.

As used herein, the term "ionomer" comprises the copolymers of ethylene and methacrylic or acrylic acid being metal neutralized. An example of such material is Surlyn® from Dupont.

As used herein, the term "polypropylene" refers to polymers incorporating propylene structural units. Examples of these are homo polypropylenes, random copolymers of propylene and ethylene, block copolymers of propylene and ethylene, copolymers or blends of propylene and rubber (such as blends of polypropylene and ethylene propylene rubber), propylene ethylene alpha olefin terpolymers and others.

These polymers may be isotactic, syndiotactic or atactic. Isotactic is preferred.

It is noted that for the purposes of the present invention, the term "inner layer" is to be regarded as an additional outer layer of the multilayer film, which is in direct contact with the item to be packaged (i.e. an outer layer of the film which is located on the inside after a packaging process, not exposed to the environment). As used herein the term "substantially non resilient material" refers to materials or material compounds comprising at least 40% per weight inorganics like calcium carbonate, titanium dioxide, wollastonite, mica, glass fibers, dolomite and the like. The rest percentage per weight can be polyethylene, polypropylene, styrene polymer or other thermoplastic material.

All measurement methods mentioned herein are readily available for the skilled person. For example, they can be obtained from the American National Standards Institute at: www.webstore.ansi.org

All percentages are based on weight per weight ratio, except when otherwise stated.

### DETAILED DESCRIPTION OF THE INVENTION

According to a first aspect the present invention is directed to a multilayer film with weight between and including 15 and 22 g/m², preferably more than 15 g/m² and less than 22 g/m², for use in malodorous item packaging, where the film comprises at least a layer comprising polypropylene and a further layer comprising an oxygen barrier material having a weight of less than 1.5 g/m².

According to a further aspect the present invention is directed to the use of a multilayer film with weight between and including 15 and 22 g/m², where the film comprises at least a layer comprising polypropylene and a further layer comprising an oxygen barrier material having a weight of less than 1.5 g/m², for packaging malodorous items.

In a further preferred embodiment, the film comprises the construction:
OUTERLAYER/ABUSELAYER/INTERMEDIATELAYER/BARRIER LAYER/INTERMEDIATE LAYER/ABUSE LAYER/INNER LAYER

In another preferred embodiment, the film comprises the construction
OUTERLAYER/INTERMEDIATELAYER/BARRIERLAYER/INTERMEDIAT E LAYER/INNER LAYER

### Detailed description of layers:

### Barrier layer.

In a preferred version of the invention, the oxygen barrier material is EVOH.

The EVOH used preferably has an ethylene content less than 48%, more preferably less than 44%, more preferably less than 38%, more preferably from 27 to 32% ethylene.

In another preferred version, the oxygen barrier material comprises polyamide.

The oxygen barrier material has a weight of less than 1.5 g/m².

Outer layer.

In a preferred version, the outer layer comprises polypropylene.

In a further preferred version, the weight of the outer layer is less than 6 g/m², more preferably less than 5 g/m².

In a further preferred version, the polypropylene is a copolymer or a blend of different monomers or polymeric structures. This blending may take place during polymerization or at a later stage.

In another preferred version the polypropylene is a homopolymer.

In another preferred version the polypropylene is a terpolymer, preferably a propylene-ethylene-butene terpolymer.

In another possible version, the outer layer comprises a polyolefin, such as low density polyethylene, ethylene alpha olefin copolymer, high density polyethylene or ethylene ester copolymer, such as EVA.

In another possible version the outer layer comprises a polybutene homopolymer and/or copolymer.

### Inner layer.

Preferred materials for the inner layer include polyolefins, such as low density polyethylene, high density polyethylene, ethylene ester copolymer, ethylene alpha olefin copolymer and polypropylene. Ionomers and styrene copolymers are also possible. Ethylene alpha olefin copolymer is particularly preferred.

In a further embodiment the inner layer comprises a polypropylene.

According to a further embodiment, the present invention is of the same configuration where inner layer comprises a "substantially non resilient material" (SNR).

In a preferred version of the invention, the SNR material is at least 10 percent, preferably at least 20, preferably at least 30 percent per weight of the inner layer.

### Intermediate layers.

In the intermediate layers, typical adhesive resins like maleic anhydrite modified polyolefins may be used. Typical examples are BYNEL® from Dupont and OREVAC® from Arkema.

In another preferred version of the invention, polyamide could be used as intermediate layer.

### General

Additives well known in the art may be used in one or more layers of the present invention. Slip additives, antiblock additives, antifog, polymer processing aids may be used if pertinent. Antimicrobial additives may also be used in one or more of the layers to inhibit the microbe formation. Preferably the antimicrobial is put on the side where the waste is in direct vicinity.

In order to increase the mechanical properties the film may be crosslinked with one of the following methods.

E-beam radiation, gamma radiation, moisture crosslinking using silane grafting compounds, peroxide crosslinking.

The film may be in tubular form or sealed at the edges or single sheet configuration. Centrefold configuration is also possible.

The preferred production method for the film is the how blown film method, which is well known in the art. Other methods like extrusion through flat cast die are also possible.

### EXAMPLES

The following Examples 1-3 and Comparative Examples 1 and 2 relate to embodiments not according to the claimed invention.

### EXAMPLE 1 (not according to the claimed invention)

A 5 layer film is produced in a commercial hot blown film line with the following recipe

| | |
|---|---|
| Inner layer | 80% EAO1+ 15% SNR1+ 5% ADDITIVES |
| Adjacent layer | 100% ADH 1 |

| | |
|---|---|
| Barrier layer | EVOH 1 |
| Adjacent layer | 100% ADH1 |
| Outer layer | PP1 |

See table 1

The thickness of the structure is 7/1.5/1.5/1.5/6 starting from the inner and going to the outer layer.

**TABLE 1**

| Type | Description | Density g/cm³ |
|---|---|---|
| EAO1 | Ethylene octene copolymer | 0.92 |
| SNR1 | Calcium carbonate compound | 1.6 |
| ADH1 | LLDPE mod. Adhesive tie | 0.92 |
| EVOH 1 | EVOH with 32% ethylene | 1.19 |

| | |
|---|---|
| PP1: | random propylene-ethylene copolymer |

The weight of the film is 16.8 g/m².

### EXAMPLE 2 (not according to the claimed invention)

A 5 layer film is produced in a hot blown film commercial line with the following recipe

| | |
|---|---|
| Inner layer | 80% EAO1+ 15% SNR1+ 5% ADDITIVES |
| Adjacent layer | 100% ADH 1 |
| Barrier layer | EVOH 1 |
| Adjacent layer | 100% ADH1 |
| Outer layer | PP1 |

The thickness of the structure is 9/2/2/2/7 starting from the inner and going to the outer layer.

The weight of the material is 21.2 g/m².

### EXAMPLE 3 (not according to the claimed invention)

A 5 layer film is produced in a commercial hot blown film line with the following recipe

| | |
|---|---|
| Inner layer | 60% EAO1+20%PP1+ 15% SNR1+ 5% ADDITIVES |
| Adjacent layer | 100% ADH 1 |
| Barrier layer | EVOH 1 |
| Adjacent layer | 100% ADH1 |
| Outer layer | PP1 |

The thickness of the structure is 8/2/2/2/6 starting from the inner and going to the outer layer.

The weight of the material is 19.29 g/m².

### COMPARATIVE EXAMPLE 1

The comparative example 1 is produced according to EP 2 332 723 A1.

A 5 layer film is produced in a commercial hot blown film line with the following recipe

| | |
|---|---|
| Inner layer | 80% EAO1+ 15% SNR1+ 5% ADDITIVES |
| Adjacent layer | 100% ADH 1 |
| Barrier layer | EVOH 1 |
| Adjacent layer | 100% ADH1 |
| Outer layer | PP1 |

The thickness of the structure is 5/1.5/1.5/1.5/4.5 starting from the inner and going to the outer layer.

The weight of this material is 13.4 g/m².

### COMPARATIVE EXAMPLE 2

A 5 layer film is produced in a hot blown film commercial line with the following recipe

| | |
|---|---|
| Inner layer | 80% EAO1+ 15% SNR1+ 5% ADDITIVES |
| Adjacent layer | 100% ADH 1 |
| Barrier layer | EVOH 1 |
| Adjacent layer | 100% ADH1 |
| Outer layer | PP1 |

The thickness of the structure is 10/2/2/2/7 starting from the inner and going to the outer layer.

The weight of the material is 22.3 g/m².

### TESTS

1. Tensile strength and elongation test is done according to ASTM D 882.
2. Production process test.
3. Cassette compression test is explained below.

### TENSILE STRENGTH AND ELONGATION TEST

Tensile strength and elongation is measured as per ASTM D882.
MD stands for machine direction, whereas TD stands for transverse direction.

| EXAMPLE | TENSILE STRENGTH(MD) | ELONGATION (MD) | TENSILE STRENGTH(TD) | ELONGATION (TD) |
|---|---|---|---|---|
| 1 | 28 | 250 | 23 | 490 |
| 2 | 32 | 275 | 30 | 470 |
| 3 | 29 | 255 | 24 | 485 |
| Comp. 1 | 25 | 200 | 21 | 502 |
| Comp.2 | 33 | 270 | 30.5 | 465 |

### PRODUCTION PROCESS TEST

Each example was run one after the other in a commercial hot blown film line for ten hours. Breakages of the film and total machine dead time were recorded. The machine dead time refers to the time required from the operators to blow again the broken bubble and set the machine in a full production mode.

| REFERENCE | BUBBLE BREAKAGES | MACHINE DEAD TIME (minutes) |
|---|---|---|
| Ex.1 | 1 | 18 |
| Ex.2 | 0 | 0 |
| Ex.3 | 0 | 0 |
| Comp.ex.1 | 6 | 125 |
| Comp.ex.2 | 0 | 0 |

### CASSETTE COMPRESSION TEST

The test is done as follows.

A commercial litter cassette is emptied and then filled with 20 meters of film of each example, all slitted at the same width. Then the "spring back effect" of each film is monitored in order to judge if the film could work in a cassette filling operation. Then a lid is put and the operator tries to remove the film from the cassette simulating the real procedure done by the people using this system.

According to the test, the films of the examples 1, 2, 3 had a good "spring back" effect. During the second part of the test they were removed by the cassette without breakages or other problems.

The comparative sample 1 has very good "spring back" effect. Nevertheless, during removal of the cassette it was punctured and torn at some points. It was judged to be too flimsy for the operation.

The comparative sample 2 was difficult to put in the cassette and it had too aggressive "spring back effect". It was judged not to be suitable for the operation.

## Claims

1. A multilayer film with weight between and including 15 and 22 g/m² for use in malodorous item packaging, where the film comprises at least a layer comprising polypropylene and a further layer comprising an oxygen barrier material having a weight of less than 1.5 g/m².

2. The film of claim 1 where the film comprises or consists of the structure
OUTER LAYER / ABUSE LAYER / INTERMEDIATE LAYER / BARRIER LAYER / INTERMEDIATE LAYER / ABUSE LAYER / INNER LAYER

3. The film of claim 1 where the film comprises or consists of the structure
OUTER LAYER / INTERMEDIATE LAYER / BARRIER LAYER / INTERMEDIATE LAYER / INNER LAYER

4. The film according to any of claims 1-3 where the outer or the inner layer of the film comprises polypropylene.

5. The film according to any of claims 1-3 where the outer layer of the film comprises polypropylene.

6. The film according to one or more of claims 1-5 where the inner layer of the film comprises ethylene alpha olefin copolymer.

7. The film according to one or more of the preceding claims where the oxygen barrier material is EVOH.

8. The film according to one or more of claims 1-6, where the oxygen barrier material is polyamide.

9. The film according to one or more of claims 1-6 where the oxygen barrier material is PVDC.

10. Use of a film of one or more of the preceding claims for packaging malodorous items.

## Patentansprüche

1. Mehrschichtfolie mit einem Gewicht zwischen und einschließlich 15 und 22 g/m² zur Verwendung in Verpackungen für übelriechende Gegenstände, wobei die Folie mindestens eine Schicht umfasst, die Polypropylen aufweist und eine weitere Schicht, die ein Sauerstoffbarrierematerial mit einem Gewicht von weniger als 1,5 g/m² aufweist.

2. Folie nach Anspruch 1, wobei die Folie die folgende Struktur aufweist oder aus ihr besteht
AUßENSCHICHT / WIDERSTANDSSCHICHT / ZWISCHENSCHICHT / BARRIERESCHICHT / ZWISCHENSCHICHT / WIDERSTANDSSCHICHT / INNENSCHICHT

3. Folie nach Anspruch 1, wobei die Folie die folgende Struktur aufweist oder aus ihr besteht
AUßENSCHICHT / ZWISCHENSCHICHT / BARRIERESCHICHT / ZWISCHENSCHICHT / INNENSCHICHT

4. Folie nach einem der Ansprüche 1-3, wobei die Außen- oder Innenschicht der Folie Polypropylen enthält.

5. Folie nach einem der Ansprüche 1-3, wobei die Außenschicht der Folie Polypropylen enthält.

6. Folie nach einem oder mehreren der Ansprüche 1-5, wobei die Innenschicht der Folie Ethylen-Alpha-Olefin-Copolymer enthält.

7. Folie nach einem oder mehreren der vorstehenden Ansprüche, wobei das Sauerstoffbarrierematerial EVOH ist.

8. Folie nach einem oder mehreren der Ansprüche 1-6, wobei das Sauerstoffbarrierematerial Polyamid ist.

9. Folie nach einem oder mehreren der Ansprüche 1-6, wobei das Sauerstoffbarrierematerial PVDC ist.

10. Verwendung einer Folie nach einem oder mehreren der vorstehenden Ansprüche zum Verpacken übelriechender Gegenstände.

## Revendications

1. Film multi-couches avec un poids compris entre et comprenant 15 et 22 g/m² destiné à être utilisé dans le conditionnement d'articles malodorants, ledit film comprenant au moins une couche comprenant du polypropylène et une autre couche comprenant un matériau de barrière à l'oxygène ayant un poids de moins de 1,5 g/m².

2. Film selon la revendication 1, ledit film comprenant ou étant constitué de la structure :
COUCHE EXTERNE / COUCHE D'EXPLOITATION / COUCHE INTERMEDIAIRE / COUCHE BARRIERE / COUCHE INTERMEDIAIRE / COUCHE D'EXPLOITATION / COUCHE INTERNE.

3. Film selon la revendication , ledit film comprenant ou étant constitué de la structure :
COUCHE EXTERNE / COUCHE INTERMEDIAIRE / COUCHE BARRIERE / COUCHE INTERMEDIAIRE / COUCHE INTERNE.

4. Film selon l'une quelconque des revendications 1 à 3, dans lequel la couche externe ou interne du film comprend du polypropylène.

5. Film selon l'une quelconque des revendications 1 à 3, dans lequel couche externe du film comprend du polypropylène.

6. Film selon une ou plusieurs de revendications 1 à 5, dans lequel la couche interne du film comprend un copolymère éthylène alpha oléfine.

7. Film selon une ou plusieurs des revendications précédentes, dans lequel le matériau de barrière à l'oxygène est l'EVOH.

8. Film selon une ou plusieurs des revendications 1 à 6, dans lequel le matériau de barrière à l'oxygène est un polyamide.

9. Film selon une ou plusieurs des revendications 1 à 6, dans lequel le matériau de barrière à l'oxygène est le PVDC.

10. Utilisation d'un film selon une ou plusieurs des revendications précédentes pour conditionner des articles malodorants.
